# EUROPÄISCHE PATENTSCHRIFT

(11) **EP 0 496 263 B1**
(45) Veröffentlichungstag und Bekanntmachung des Hinweises auf die Patenterteilung: **15.03.1995**
(21) Anmeldenummer: 92100574.0
(22) Anmeldetag: 15.01.1992
(51) Int. Cl.: C04B 18/02, C04B 18/16, C04B 41/65

(54) **Verfahren zur Wiederverwendung von teerhaltigen Baustoffen**
Process for recycling of bituminous building material
Procédé de recyclage de matériaux de construction contenant du bitume

(30) Priorität: 15.01.1991 DE 4100904
(43) Veröffentlichungstag der Anmeldung: 29.07.1992
(73) Patentinhaber: WILLY KLAUSMANN, Inh. Hans Klausmann, Betonsteinwerk, Strassenbaustoffe, Güternahverkehr, D-47809 Krefeld (DE)
(72) Erfinder: Klausmann, Hans, W-4150 Krefeld (DE); Klausmann, Ralf, W-4150 Krefeld (DE)
(74) Vertreter: Stark, Walter, Dr.-Ing.

(56) Entgegenhaltungen:
- FR-E- 44 040
- SOVIET INVENTIONS ILLUSTRATED Derwent Publications Ltd.,London, GB; week 8613, Class A, AN 86-087213; & SU- A - 1178-730
- CHEMICAL ABSTRACTS Band 113, Nr. 16, 15. Oktober 1990, Columbus, Ohio, US; & CA -137547e

## Beschreibung

Die Erfindung betrifft ein Verfahren zur Wiederverwendung von teerhaltigen Baustoffen. Teer wurde ebenso wie Bitumen in der Vergangenheit als bewährtes Bindemittel für Straßenbaustoffmaterialien eingesetzt. Nach neueren wissenschaftlichen Untersuchungen und den daraus gewonnenen Erkenntnissen wird Teer heute jedoch als umweltschädlich eingestuft. Fallen im Zuge von Erneuerungs- oder Wartungsarbeiten teerhaltige Baustoffe an, dann müssen sie kostenaufwendig entsorgt, auf die Deponien gebracht oder mit örtlicher Genehmigung aufwendig recycelt werden.

Aufgabe der Erfindung ist es, teerhaltige Baustoffe ohne aufwendige Entsorgung wieder als Baustoffe einzusetzen.

Diese Aufgabe wird dadurch gelöst, dar die teerhaltigen Baustoffe zerkleinert und mit einem zementhaltigen Bindemittel gemischt sowie dann als Hinterbeton bei der Herstellung von Bausteinen verwendet werden. Durch die Zerkleinerung, bei der die teerhaltigen Baustoffe vorzugsweise in einer Brechanlage auf Korngrößen bis zu 11mm zerkleinert werden, erhält man eine Oberflächenvergrößerung, die die Umhüllung und Einbindung der Körner in das zementhaltige Bindemittel begünstigt. Insbesondere können auch die zerkleinerten teerhaltigen Baustoffe unter Zusatz von Kies mit dem zementhaltigen Bindemittel gemischt werden. Dem Gemisch können Additive zugegeben werden. Als Bindemittel eignet sich vorzugsweise ein Zement PZ 45.

Aus dem Gemisch werden Hinterbeton- Formlinge gebildet, die mit einer Vorsatzschicht aus gebrochenem Hartgestein zu Bausteinen komplettiert werden. Die Vorsatzschicht weist vorzugsweise eine Stärke von 1 cm auf.

Im folgenden wird ein Ausführungsbeispiel der Erfindung erläutert:
100 kg teerhaltige Baustoffe, die bei der Straßenerneuerung angefallen sind, werden in einer Prallmühle auf Korngrößen von 0 mm bis zu 11 mm zerkleinert. Die zerkleinerten Baustoffe werden mit 270 kg Sand/Splitt-Gemisch, 125 kg Zement PZ 45 sowie 20 kg Wasser und Additiven gemischt. Aus dem Gemisch werden Hinterbeton-Formlinge gebildet, die anschließend mit einer 1 cm starken Vorsatzschicht aus gebrochenem Hartgestein zu Bausteinen komplettiert werden.

## Patentansprüche

1. Verfahren zur Wiederverwendung von teerhaltigen Baustoffen, dadurch gekennzeichnet, daß die teerhaltigen Baustoffe zerkleinert und mit einem zementhaltigen Bindemittel gemischt, sowie dann als Hinterbeton bei der Herstellung von Bausteinen verwendet werden.

2. Verfahren nach Anspruch 1, dadurch gekennzeichnet, daß die teerhaltigen Baustoffe in einer Brechanlage auf Korngrößen von bis zu 11 mm zerkleinert werden.

3. Verfahren nach Anspruch 1 oder 2, dadurch gekennzeichnet, daß die zerkleinerten teerhaltigen Baustoffe unter Zusatz von Kies mit dem zementhaltigen Bindemittel gemischt werden.

4. Verfahren nach einem der Ansprüche 1 bis 3, dadurch gekennzeichnet, daß als Bindemittel ein Zement PZ 45 verwendet wird.

5. Verfahren nach einem der Ansprüche 1 bis 4, dadurch gekennzeichnet, daß dem Gemisch Additive zugegeben werden.

6. Verfahren nach einem der Ansprüche 1 bis 5, dadurch gekennzeichnet, daß auf den Hinterbeton eine Vorsatzschicht aus gebrochenem Hartgestein aufgebracht wird.

7. Verfahren nach Anspruch 6, dadurch gekennzeichnet, daß auf den Hinterbeton eine Vorsatzschicht von 1 cm Stärke aufgebracht wird.

## Claims

1. Method for the re-use of bituminous building materials, characterised in that the bituminous building materials are crushed, mixed with a cement-containing binding agent, and then used as reconstituted concrete in the production of blocks.

2. Method according to claim 1, characterised in that the bituminous building materials are crushed in a crushing plant to particle sizes of up to 11 mm.

3. Method according to claim 1 or 2, characterised in that the crushed bituminous building materials are mixed with the cement-containing binding agent with the addition of gravel.

4. Method according to one of claims 1 to 3, characterised in that a PZ 45 cement is used as the binding agent.

5. Method according to one of claims 1 to 4, characterised in that additives are added to the mixture.

6. Method according to one of claims 1 to 5, characterised in that an additional layer of hard broken rock is applied to the reconstituted concrete.

7. Method according to claim 6, characterised in that an additional layer with a thickness of 1 cm is applied to the reconstituted concrete.

## Revendications

1. Procédé pour réutiliser des matériaux de construction contenant du goudron, caractérisé par le fait que l'on fragmente les matériaux de construction contenant du goudron, qu'on les mélange à un liant contenant du ciment et qu'on les utilise alors sous la forme d'un béton de structure pour la fabrication de parpaings.

2. Procédé selon la revendication 1, caractérisé par le fait que l'on fragmente les matériaux de construction contenant du goudron dans une installation de concassage de façon à ce qu'ils présentent une granulométrie allant jusqu'à 11 mm.

3. Procédé selon la revendication 1 ou 2, caractérisé par le fait que l'on mélange au liant contenant du ciment les matériaux de construction contenant du goudron qui ont été fragmentés, et que l'on ajoute du gravier.

4. Procédé selon l'une des revendications 1 à 3, caractérisé par le fait que l'on utilise comme liant un ciment PZ 45.

5. Procédé selon l'une des revendications 1 à 4, caractérisé par le fait que l'on ajoute des additifs au mélange.

6. Procédé selon l'une des revendications 1 à 5, caractérisé par le fait que l'on applique sur le béton de structure une couche de parement en pierres dures broyées.

7. Procédé selon la revendication 6, caractérisé par le fait que l'on applique sur le béton de structure une couche de parement d'une épaisseur de 1 cm.
